# EUROPÄISCHE PATENTSCHRIFT

(11) **EP 3 015 310 B1**
(45) Veröffentlichungstag und Bekanntmachung des Hinweises auf die Patenterteilung: **15.08.2018**
(21) Anmeldenummer: 14191222.0
(22) Anmeldetag: 31.10.2014
(51) Int. Cl.: B60P 7/16, B60N 2/28, B60P 3/36, B60N 2/427

(54) **Fahrzeugmöbel und Fahrzeug**
Vehicle furniture and vehicle
Mobilier de véhicule et véhicule

(43) Veröffentlichungstag der Anmeldung: 04.05.2016
(73) Patentinhaber: Lisa Dräxlmaier GmbH, 84137 Vilsbiburg (DE)
(72) Erfinder: Wensauer, Wolfgang, 94116 Hutthurm (DE); Sarcher, Stefan, 84137 Vilsbiburg (DE); Gerhard, Matthias, 21445 Wulfsen (DE)

(56) Entgegenhaltungen:
- EP-A2- 2 082 903
- GB-A- 2 444 591
- US-A1- 2013 038 007

## Beschreibung

Die Erfindung betrifft ein Fahrzeugmöbel, aufweisend ein erstes Möbelteil und ein zweites Möbelteil. Die Erfindung betrifft auch ein Fahrzeug, das mindestens ein solches Fahrzeugmöbel aufweist. Die Erfindung ist insbesondere anwendbar auf Diwane für Fahrzeuge.

Bei einem Aufprall oder "Crash" eines Fahrzeugs treten in Aufprallrichtung (die meist seiner Bewegungs- oder Fahrtrichtung entsprechen) typischerweise hohe Beschleunigungen an Fahrzeugteilen auf. Es wird gefordert, dass ein erheblicher Teil der auftretenden Energien von dem Fahrzeug absorbiert wird. Für den Fall eines Fahrzeugmöbels sollen die an ihm auftretenden Energien oder Kräfte möglichst weitgehend absorbiert werden, ohne dass das Fahrzeugmöbel vollständig zerstört und/oder ein darauf sitzender Passagier gefährdet wird. DE 40 33 028 A1 offenbart eine Sicherheitsgurtanordnung für Kraftfahrzeuginsassen, bei welcher die Position eines verstellbaren Umlenkbeschlages für einen oberen Abschnitt des Sicherheitsgurtes die Höhe der maximalen Gurtkraft bei einem Unfall bestimmt. Hierzu ist eine Führungsschiene für den Umlenkbeschlag unmittelbar über ein vorverformtes Blech am Fahrzeugaufbau befestigt. Einen weiteren Befestigungspunkt stellt ein am Fahrzeugaufbau befestigter Achskörper dar, auf dem die Führungsschiene schwenkbeweglich gelagert ist. Beim Verstellen des Umlenkbeschlages näher zum Fahrzeuginsassen hin vergrößert sich in vorteilhafter Weise der Hebelarm zwischen dem Umlenkbeschlag und dem Achskörper, so dass in Abhängigkeit der Verstellung des Umlenkbeschlages eine gezielt veränderbare Verformung am Blech entsteht.

Für Befestigung eines Kindersitzes ist aus der GB 2 444 591 A1 bekannt, eine deformierbare Struktur einzusetzen, die aus sinusförmige Schleifen eines Metallstabes oder Metalldrahtes bestehen. Aus der US 2013/038007 A1 ist ein Element zur Energie-Absorption für Hubschraubersitze bekannt. Bis zu einer Schwellwertkraft bleiben diese Systeme steif oder elastisch verformbar und verformen sich dann plastisch. Alterung oder Beschädigung der Strukturen können das Verhalten im späteren Crashfall nachteilig beeinflussen.

Es ist die **Aufgabe** der vorliegenden Erfindung, die Nachteile des Standes der Technik zumindest teilweise zu überwinden und insbesondere ein Fahrzeugmöbel mit einer Möglichkeit zur Aufnahme hoher Energien im Crashfall bei reduzierter Gefährdung eines darauf sitzenden Passagiers oder Insassen bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Fahrzeugmöbel gemäß Anspruch 1, u.a. aufweisend ein erstes Möbelteil und ein zweites Möbelteil, die mittels mindestens eines Crashelements miteinander verbunden sind, wobei mindestens ein Crashelement einen ersten Befestigungsbereich zur Befestigung an dem ersten Möbelteil, einen zweiten Befestigungsbereich zur Befestigung an dem zweiten Möbelteil und dazwischen einen mäanderförmig verlaufenden Zwischenabschnitt aufweist.

Dieses Fahrzeugmöbel weist den Vorteil auf, dass es bei einer Relativbewegung der beiden Möbelteile zueinander, z.B. bei einem Aufprall oder Crash, Energie durch plastische Verformung aufnimmt und so diese Relativbewegung abschwächt. Durch den mäanderförmigen Verlauf können auf einer kurzen Länge des Crashelements viele vordefinierte Biegebereiche bereitgestellt werden, welche eine hohe Energiemenge umsetzen. Dies unterstützt auch einen kompakten Aufbau.

Unter einem Crashelement, Energieabsorptionselement oder Deformationselement mag insbesondere ein Körper verstanden werden, der dazu vorgesehen ist, sich bei einem Aufprall oder Crash unter plastischer Deformation zu verformen, d.h. rein plastisch oder elastisch-plastisch. Ein Crashelement ist insbesondere dazu vorgesehen, in einer vorgesehenen Richtung (ohne Beschränkung der Allgemeinheit auch als "Hauptdeformationsrichtung" bezeichnet) deformiert zu werden. Diese Hauptdeformationsrichtung entspricht typischerweise einer Richtung, in welcher die höchste Energieaufnahme bei definierter Verformung erreicht werden kann. Die Hauptdeformationsrichtung mag insbesondere einer Hauptbewegungsrichtung des Fahrzeugs entsprechen, z.B. nach vorne bei einem Kraftfahrzeug und einem Flugzeug oder nach vorne und in einer Drehrichtung um eine Rotorachse bei einem Hubschrauber. Jedoch mag die Hauptdeformationsrichtung eines Crashelements auch in eine andere Richtung ausgerichtet sein, z.B. senkrecht zu einer Hauptbewegungsrichtung, um einen Seitenaufprall zu dämpfen. Die Hauptdeformationsrichtung mag einer Erstreckung oder Ausrichtung des Crashelements zwischen seinen Befestigungsbereichen entsprechen.

Das erste Möbelteil und das zweite Möbelteil sind selbst insbesondere steife Strukturen, welche nicht dazu vorgesehen sind, sich bei einem Aufprall unter signifikanter Energieaufnahme zu verformen. Es ist eine Ausgestaltung, dass das erste Möbelteil ein Sitzbereich ist, während das zweite Möbelteil ein mit dem Fahrzeug fest zu verbindendes Teil, z.B. ein Sockel oder 'Monument', ist. Durch das mindestens eine Crashelement lässt also eine Bewegung des Sitzbereichs im Aufprallfall dämpfen, was einen darauf sitzenden Insassen schützt.

Unter einem mäanderförmigen Verlauf mag insbesondere ein Verlauf des Zwischenabschnitts zwischen den beiden Befestigungsbereichen verstanden werden, der zumindest teilweise gekrümmt ist und zumindest einmal seine Krümmungsrichtung ändert. Insbesondere die gekrümmten Bereiche stellen für eine plastische Verformung vorgesehene Bereiche dar. Der mäanderförmige Verlauf ermöglicht eine besonders einfache Formbarkeit und Anbringung des Crashelements sowie eine besonders kompakte Bauweise. Der Zwischenabschnitt ist insbesondere freischwebend angeordnet, um in seiner Deformation nicht behindert zu werden.

Das Crashelement mag insbesondere aus Metall bestehen, das eine hohe Festigkeit und gute plastische Verformbarkeit aufweist. Das Metall mag Stahl sein. Das Crashelement mag für eine besonders einfache und preiswerte Herstellung aus einem Blech hergestellt sein bzw. ein Blechteil sein. Es mag insbesondere ein Stanz/Biege-Teil oder Schneid/Biege-Teil sein. Die Verformungseigenschaften des Crashelements mögen insbesondere auch durch eine Wahl seines Materials und/oder seiner Materialstärke, z.B. seiner Dicke und/oder Breite, einstellbar sein. Das Material und/oder die Materialstärke unterschiedlicher Crashelemente mögen gleich oder unterschiedlich sein.

Zumindest ein Teil des Crashelements, z.B. der Zwischenanschnitt, mag bandförmig ausgebildet sein. Insbesondere mögen die Befestigungsbereiche breiter sein als der Zwischenabschnitt. Der Zwischenabschnitt mag insbesondere eine konstante Breite aufweisen. Durch eine Variation der Breite und/oder der Dicke des Zwischenabschnitts sind eine Verformungseigenschaft und eine maximale Energieaufnahme besonders einfach einstellbar. Gemäß dem kennzeichnenden Teil des Anspruchs 1 sind das erste Möbelteil und das zweite Möbelteil mittels mindestens einer Hilfsversteifung miteinander verbunden, wobei die mindestens eine Hilfsversteifung eine vorbestimmte Versagenslast aushält. Dadurch wird erreicht, dass das Crashelement zumindest in seiner Hauptdeformationsrichtung erst nach Versagen der Hilfsversteifung auslöst. Dies verhindert eine Verformung bei kleinen, noch keinen Aufprall oder Unfall darstellenden Beschleunigungen. So kann insbesondere eine Schädigung (z.B. eine Materialermüdung) des Crashelements durch häufige Wechsellasten verhindert werden. Beispielsweise mag die Hilfsversteifung dazu ausgelegt sein, Beschleunigungen bei Start und Stopp eines Fahrzeugs auszuhalten, aber keinen Aufprall, z.B. keinen Unfall oder eine Notbremsung.

Es ist eine Ausgestaltung, dass der Zwischenabschnitt mindestens zwei geradlinige Abschnitte mit einem jeweiligen diese verbindenden gekrümmten Verbindungsabschnitt aufweist. Der mindestens eine gekrümmte Verbindungsabschnitt dient im Crashfall als ein definierter Verformungsabschnitt. Ein solches Crashelement lässt sich besonders einfach herstellen.

Alternativ mag der Zwischenabschnitt ohne geradlinige Abschnitte ausgebildet sein, beispielsweise sinusförmig. Er mag z.B. auch mindestens einen geradlinigen Abschnitt und mindestens einen sinusförmigen Abschnitt aufweisen.

Für eine besonders hohe Energieaufnahme bei kompaktem Aufbau ist es eine Ausgestaltung, dass mindestens ein Verbindungsabschnitt eine Krümmung zwischen 20° und 105°, insbesondere zwischen 30° und 90°, insbesondere zwischen 45° und 60°, insbesondere von ca. 45° oder ca. 60°, aufweist.

Eine Krümmung mag insbesondere einem Öffnungswinkel zweier daran anschließender geradliniger Abschnitte entsprechen. Zumindest zwei unterschiedliche Verbindungsabschnitte können eine gleiche Krümmung oder eine unterschiedliche Krümmung aufweisen.

Ein Crashelement mag insbesondere mehrere Verbindungsabschnitte aufweisen, die alle die gleiche Krümmung aufweisen.

Alternativ mögen mehrere aufeinanderfolgende Verbindungselemente sukzessive kleinere oder größere Krümmungen aufweisen. Dadurch kann insbesondere ein Zwischenbereich bereitgestellt werden, dessen geradlinige Verbindungselemente in einer Richtung immer enger zusammenstehen. Ein solcher in einer Richtung immer enger zusammenstehender Zwischenbereich mag allgemein vorteilhaft sein, also z.B. auch bei einem sinusförmigen Verlauf.

Die Befestigungsbereiche mögen mit dem Zwischenabschnitt ebenfalls über gekrümmte Verbindungsabschnitte verbunden sein.

Für eine ausreichend hohe Energieaufnahme von auch schwereren Fahrzeugmöbeln wie Diwanen mag der Zwischenabschnitt mindestens drei geradlinige Abschnitte aufweisen. Zum gleichen Zweck mögen das Crashelement (einschließlich der Befestigungselemente) oder nur der Zwischenabschnitt allgemein einen S-förmigen oder einen doppel-S-förmigen Verlauf aufweisen.

Es ist eine zur sicheren Befestigung auf ebenen Unterlagen vorteilhafte Ausgestaltung, dass die Befestigungsbereiche einen geradlinigen Verlauf aufweisen. Sie mögen zum Vorsehen einer ausreichenden Zahl Aussparungen zur Befestigung an einem Möbelteil breiter sein als der Zwischenabschnitt.

Allgemein kann eine Grundform des Crashelements zur Abstimmung an eine gewünschte Energieaufnahme und/oder Baugröße variiert werden. So mögen zusätzlich oder alternativ zur Krümmung ein Krümmungsradius und/oder eine Länge der geraden Abschnitte variiert werden. Beispielsweise mag ein Crashelement mehrere gerade Abschnitte mit unterschiedlicher Länge aufweisen.

Die Verbindungsabschnitte mögen als Punkte einer gedachten 'Einhüllenden' dienen. Die Einhüllende mag beispielsweise zwei parallel zueinander verlaufende gedachte Seiten aufweisen. Sie mag aber z.B. auch zwei zueinander schräg bzw. sich verjüngend verlaufende Seiten aufweisen. Die Seiten sind insbesondere zueinander spiegelbildlich angeordnet, insbesondere gespiegelt an einer durch den Verbindungsabschnitt verlaufenden gedachten Mittellinie. Die schräg zueinander verlaufenden Seiten mögen geradlinig oder gekrümmt sein. Gerade Seiten mögen beispielsweise eine konische Einhüllende bilden oder begrenzen. Gekrümmte Seiten mögen beispielsweise parabelförmig verlaufen.

Es ist eine zur möglichst unbehinderten plastischen Verformung vorteilhafte Ausgestaltung, dass der Zwischenabschnitt mindestens eine Aussparung, insbesondere mindestens ein Loch, aufweist, insbesondere an mindestens einem Verbindungsabschnitt.

Es ist ferner eine Ausgestaltung, dass das Fahrzeugmöbel mehrere Crashelemente aufweist, die beabstandet nebeneinander angeordnet sind. So kann eine besonders hohe und durch die Zahl der eingesetzten Crashelemente skalierbare Energieabsorption erreicht werden. Diese Crashelemente mögen insbesondere die gleiche Hauptdeformationsrichtung aufweisen.

Es ist auch eine Ausgestaltung, dass das Fahrzeugmöbel mindestens zwei Crashelemente aufweist, die in entgegengesetzte Richtungen zusammendrückbar sind. Dadurch kann eine Energieaufnahme in entgegengesetzte Richtungen individuell eingestellt werden. Diese Ausgestaltung mag durch unterschiedliche Befestigungspunkte der Crashelemente erreicht werden. Insbesondere mögen sie Bezug auf eine bestimmte Richtung ein Zugelement bzw. ein Druckelement darstellen.

Es ist noch eine Ausgestaltung, dass zumindest ein Crashelement an zumindest einem Befestigungsbereich eine Rastvorrichtung aufweist. Diese Rastvorrichtung ermöglicht es, eine Position zumindest eines Befestigungsbereichs auf einfache und sichere Weise zu variieren.

Es ist außerdem eine Ausgestaltung, dass das Fahrzeugmöbel ein Diwan ist, ohne darauf beschränkt zu sein. So mag das Fahrzeugmöbel auch ein Einzelsitz oder eine Sitzreihe sein.

Die Aufgabe wird auch gelöst durch ein Fahrzeug, aufweisend mindestens ein Fahrzeugmöbel wie oben beschrieben. Das Fahrzeug kann analog zu dem Fahrzeugmöbel ausgebildet werden und weist die gleichen Vorteile auf.

Das Fahrzeug mag z.B. ein Kraftfahrzeug (z.B. ein Bus), ein Schiff oder ein Flugzeug sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
Fig.1 zeigt in einer Schrägansicht ein Fahrzeugmöbel in Form eines Diwans;
Fig.2 zeigt in Draufsicht eine Skizze eines Fahrzeugmöbels mit Crashelementen;
Fig.3 zeigt in Seitenansicht eine Skizze eines Fahrzeugmöbels mit Crashelementen;
Fig.4 zeigt als Schnittansicht in Seitendarstellung ein Crashelement;
Fig.5 zeigt in Seitenansicht ein Crashelement mit einer Hilfsversteifung;
Fig.6 zeigt in Seitenansicht eine weitere Hilfsversteifung; und
Fig.7 zeigt in Seitenansicht noch eine weitere Hilfsversteifung.

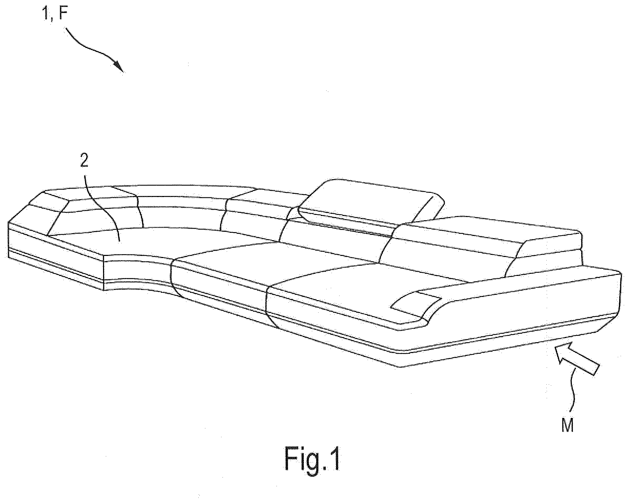

**Fig.1** zeigt in einer Schrägansicht ein Fahrzeugmöbel in Form eines Diwans 1. Der Diwan 1 weist in Draufsicht einen gekrümmten Sitzbereich 2 auf. Ein solcher Diwan 1 mag beispielsweise in Fahrzeugen F wie Kraftfahrzeugen (z.B. in Bussen), Schiffen oder Flugzeugen verbaut sein. Der Diwan 1 ist typischerweise, aber nicht notwendigerweise, fest zu einer Hauptbewegungsrichtung M des Fahrzeugs F verbaut.

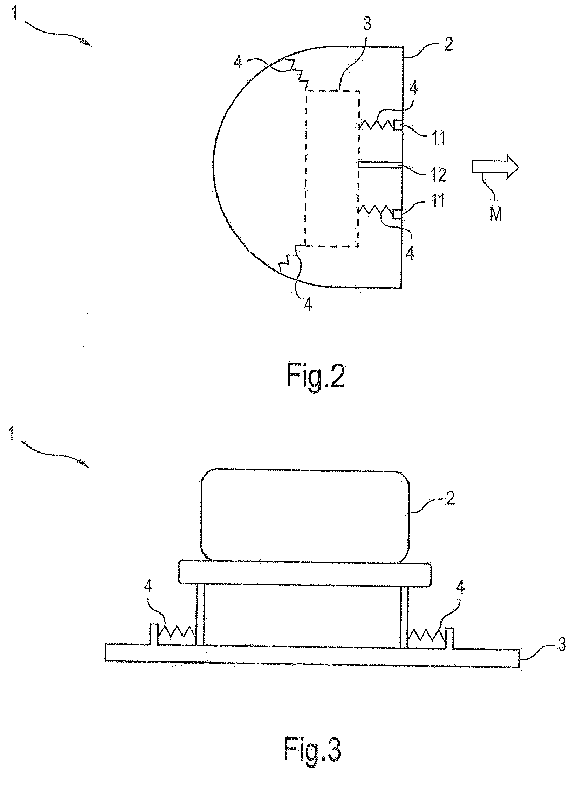

Wie skizzenartig in **Fig.2** und in **Fig.3** angedeutet, weist der Diwan 1 mindestens zwei Möbelteile auf, nämlich hier den Sitzbereich 2 und einen mit dem Fahrzeug F fest zu verbindenden Teil, das sog. 'Monument' 3. Der Sitzbereich 2 und das Monument 3 sind in sich vergleichsweise steif aufgebaut.

Um bei einem Aufprall des Fahrzeugs F eine hohe Menge an Energie aufzunehmen, ohne auf dem Sitzbereich 2 des Diwans 1 sitzende Personen zu gefährden, sind der Sitzbereich 2 und das Monument 3 durch plastisch (d.h., rein plastisch oder elastisch-plastisch) verformbare Crashelemente 4 miteinander verbunden. Im Aufprallfall kann so eine Energie eines gegen das Monument 3 beschleunigten Sitzbereichs 2 effektiv aufgenommen werden, ohne den Sitzbereich 2 als solchen zu beschädigen oder von dem Monument 3 zu lösen.

In Fig.2 sind vier Crashelemente 4 eingezeichnet, deren Ausrichtungen und somit Hauptdeformationsrichtungen sich teilweise unterscheiden, nämlich teilweise winkelversetzt zueinander sind. Dadurch können auch Belastungen berücksichtigt werden, die nicht entlang der Hauptbewegungsrichtung M des Fahrzeugs verlaufen, beispielsweise ein Seitenaufprall. Die Zahl, Ausgestaltung und Hauptdeformationsrichtungen der Crashelemente 4 sind jedoch grundsätzlich nicht beschränkt. So mögen die Crashelemente 4 auch nur in Hauptbewegungsrichtung M des Fahrzeugs ausgerichtet sein und damit besonders effektiv nur in dieser Richtung wirken.

Insbesondere mögen zwei oder mehr Crashelemente 4 in Bezug auf ihre vorgesehene Hauptdeformationsrichtung (insbesondere entsprechend der Hauptbewegungsrichtung M des Fahrzeugs F) beabstandet nebeneinander angeordnet sind, wie hier durch die beiden rechts eingezeichneten Crashelemente 4 angedeutet. So kann eine Aufprallenergie in Hauptdeformationsrichtung verteilt aufgenommen werden und zudem eine Drehung der beiden Möbelteile 2 und 3 gegeneinander besonders effektiv unterdrückt werden. Die maximal mögliche Energieaufnahme durch die Crashelemente 4 ist so zudem einfach skalierbar.

Ein Crashelement 4 mag in Bezug auf seine Hauptdeformationsrichtung nur als ein Zugelement, nur als ein Druckelement oder sowohl als ein Zugelement als auch als ein Druckelement dienen. Bei einem Einsatz als ein Zugelement kann das Crashelement 4 Aufprallenergie in erheblicher Stärke bei seinem Auseinanderziehen aufnehmen. Analog kann das Crashelement 4 bei einem Einsatz als ein Druckelement Aufprallenergie in erheblicher Stärke bei seinem Zusammendrücken aufnehmen. Die unter Zug bzw. unter Druck aufnehmbare Aufprallenergie mag für ein Crashelement 4 unterschiedlich sein.

Insbesondere falls die unter Zug bzw. die unter Druck aufnehmbaren Aufprallenergien für ein Crashelement 4 deutlich unterschiedlich sind, mag der Diwan 1 mindestens zwei Crashelemente 4 aufweisen, die in entgegengesetzte Richtungen ausgerichtet sind. So können beispielsweise in entgegengesetzte Richtungen auftretende Aufprälle bzw. ein Aufprall und ein sich anschließender Rückprall besonders wirksam berücksichtigt werden.

Wie in Fig.2 angedeutet, mögen zumindest einige der Crashelemente 4 an zumindest einer Rastvorrichtung 11 befestigt sein. Die Rastvorrichtung 11 mag ein Teil des Crashelements 4, des Sitzbereichs 2 und/oder des Monuments 3 sein. Mittels der Rastvorrichtung 11 kann eine Befestigungsposition des Crashelements 4 einfach rastend verändert werden. Beispielsweise mag das Crashelement 4 so in seiner Ruhestellung (ohne Aufprall) verlängert oder verkürzt bzw. auseinandergezogen oder zusammengedrückt werden.

Wie ebenfalls in Fig.2 angedeutet, können der Sitzbereich 2 und das Monument 3 mittels mindestens eines mechanisch steifen, im Folgenden ohne Beschränkung der Allgemeinheit als "Hilfsversteifung" 12 bezeichneten Verbindungselements miteinander verbunden sein. Die Hilfsversteifung 12 hält insbesondere in einer vorgesehenen Hauptdeformationsrichtung mindestens eines Crashelements 4 eine vorbestimmte (maximale) Versagenslast aus. Die Hilfsversteifung 12 dient somit als eine zu mindestens einem Crashelement 4 mechanisch parallel geschaltete 'Sicherung', die eine Verformung des mindestens einen zugehörigen Crashelements 4 bei geringen Beschleunigungskräften (die insbesondere nicht von einem Unfall oder Aufprall stammen) verhindert. Insbesondere kann so eine Beschädigung des Crashelements 4 durch langandauernde zyklische Wechsellasten verhindert werden. Die Hilfsversteifung 12 verhindert eine Relativverschiebung des Sitzbereichs 2 gegen das Monument 3 bis zum Erreichen oder Überschreiten der Versagenslast. Folglich werden bis zum Erreichen der Versagenslast Kräfte zwischen dem Sitzbereich 2 und dem Monument 3 überwiegend über die mindestens eine Hilfsversteifung 12 übertragen. Mit Erreichen der Versagenslast versagt die mindestens eine Hilfsversteifung 12 (insbesondere plötzlich), und die Kräfte werden nun zumindest überwiegend über das mindestens eine Crashelement 4 übertragen. Dadurch verformt es sich unter Energieaufnahme.

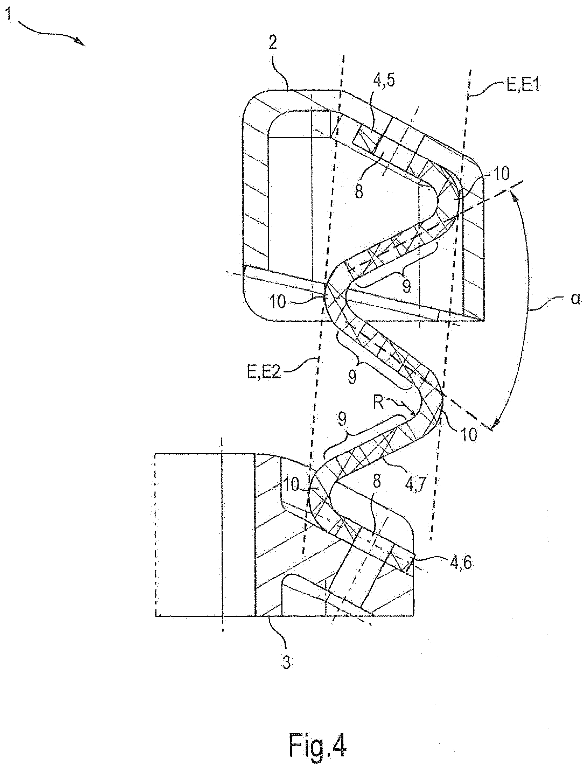

**Fig.4** zeigt eine mögliche konkrete Ausgestaltung eines Crashelements 4 eines Fahrzeugmöbels, z.B. des Diwans 1. Das Crashelement 4 besteht aus einem plastisch oder elastisch-plastisch verformbaren Material, z.B. aus Metall, beispielsweise aus Stahl. Es weist insbesondere eine profilartige oder bandartige Grundform auf, die hier von der Seite gezeigt ist.

Das Crashelement 4 weist einen ersten Befestigungsbereich 5 zur Befestigung an dem Sitzbereich 2, einen zweiten Befestigungsbereich 6 zur Befestigung an dem Monument 3 und dazwischen einen mäanderförmig verlaufenden Zwischenabschnitt 7 auf. Dies bedeutet hier, dass ein Verlauf des Zwischenabschnitts 7 zwischen den beiden Befestigungsbereiche 5 und 6 zumindest teilweise gekrümmt ist und zumindest einmal seine Krümmungsrichtung ändert. Insbesondere weist das Crashelement 4 einschließlich der beiden Befestigungsbereiche 5 und 6 eine Doppel-S-Form auf.

Die Befestigungsbereiche 5 und 6 weisen jeweils mindestens eine Aussparung 8 zur Durchführung eines Befestigungselements, z.B. einer Schraube oder eines Niets, auf. Die Befestigungsbereiche 5 und 6 mögen insbesondere (senkrecht zur Bildebene) breiter sein als der Zwischenabschnitt 7.

Der Zwischenabschnitt 7 weist hier drei geradlinige Abschnitte 9 auf, die durch zwei gekrümmte Verbindungsabschnitte 10 miteinander verbunden sind. Der Zwischenabschnitt 7 weist ferner endseitig jeweils einen Verbindungsabschnitt 10 auf, der den Zwischenabschnitt 7 mit dem ersten Befestigungsbereich 5 bzw. dem zweiten Befestigungsbereich 6 verbinden. Die Verbindungsabschnitte 10 weisen einen gleichen, konstanten Krümmungsradius auf. Zwei benachbarte geradlinige Abschnitte 9 nehmen einen Winkel α von ca. 60° zueinander ein. Dies kann auch so ausgedrückt werden, dass der diese beiden benachbarten geradlinigen Abschnitte 9 verbindende Verbindungsabschnitt 10 eine Krümmung von ca. 60° aufweist.

Eine durch die Aussparungen 8 der Befestigungsbereiche 5 und 6 verlaufende gedachte Mittellinie (o. Abb.) führt mittig durch die geradlinigen Abschnitte 9 bzw. durch den Verbindungsabschnitt 7. Dies vermeidet ein unerwünschtes Abknicken oder Ausbeulen des Verbindungsabschnitts 7 in Hauptdeformationsrichtung. Die Verbindungsabschnitte 7 bilden hier zudem Punkte einer 'Einhüllenden' E mit parallel verlaufenden Seiten E1 und E2. Dies bedeutet unter anderem, dass die äußersten Punkte der Verbindungsabschnitte 7 einen immer gleichen senkrechten Abstand zu der Mittellinie aufweisen.

Das Crashelement 4 mag an beliebiger geeigneter Stelle, insbesondere an mindestens einem Verbindungsabschnitt 7, mindestens eine Aussparung (o. Abb.), z.B. ein Loch oder einen seitlich offenen Schlitz, aufweisen, um eine Verformungsmöglichkeit des Crashelements 4 zu verbessern.

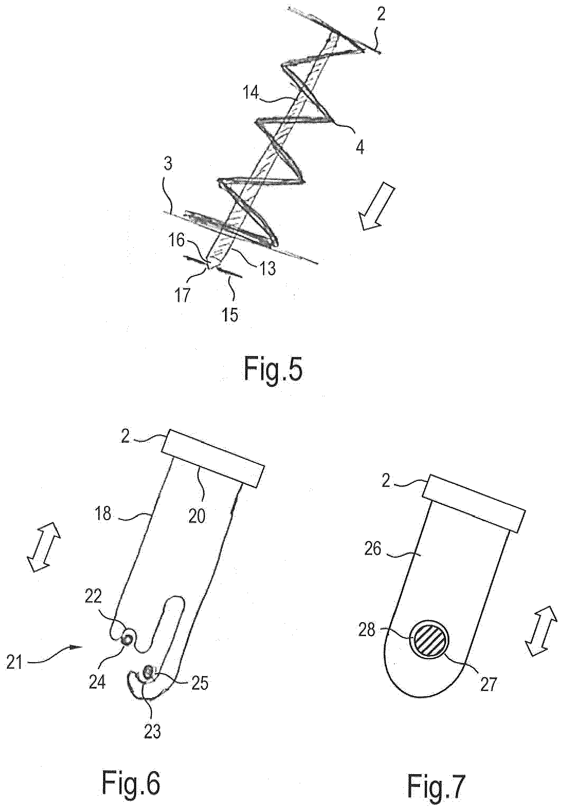

**Fig.5** zeigt in Seitenansicht ein Crashelement, z.B. Crashelement 4, und eine dieses sichernde Hilfsversteifung 13. Die Hilfsversteifung 13 weist einen steifen Dorn 14 auf, der parallel zu dem Crashelement 4 in einer vorgesehenen Hauptdeformationsrichtung ausgerichtet ist, wie durch den Pfeil angedeutet. Ein Ende des Dorns 14 ist hier beispielsweise fest an dem Sitzbereich 2 angebracht, während das andere Ende an einer an dem Monument 3 angebrachten Membran 15 (z.B. aus Kunststoff oder Metall) aufliegt. Das auf der Membran 15 aufliegende Ende 16 ist spitz zulaufend ausgebildet und ragt teilweise durch ein kleines Loch 17 in der Membran 15. So lässt sich eine korrekte Ausrichtung und Positionierung des spitzen Endes 16 an der Membran 15 erreichen. Werden der Sitzbereich 2 und das Monument 3 zusammengedrückt, wird in der Hauptdeformationsrichtung eine Last auf die Hilfsversteifung 13 dergestalt ausgeübt, dass der Dorn 14 auf die Membran 15 drückt. Liegt diese Last unterhalb der (maximalen) Versagenslast, bleibt die Membran 15 intakt und verhindert, dass sich der Sitzbereich 2 und das Monument 3 aufeinander zubewegen. Wird die Versagenslast erreicht oder überschritten, wird die Membran 15 zerstört, z.B. indem der Dorn 14 das Loch 17 aufweitet und dann durch das aufgeweitete Loch 17 hindurchgleitet. Der Sitzbereich 2 und das Monument 3 können dann auch das Crashelement 4 unter Energieübertrag zu dessen plastischer Verformung zusammendrücken. Die Hilfsversteifung 13 mag auch umgekehrt in Bezug auf den Sitzbereich 2 und das Monument 3 angeordnet sein.

Die Hilfsversteifung 13 mag auch eine von dem Crashelement 4 separate Vorrichtung sein.

**Fig.6** zeigt in Seitenansicht eine weitere mögliche Hilfsversteifung 18. Die Hilfsversteifung 18 ist als ein steifes Metallstück ausgebildet, das mit einem Ende 20 fest an dem Sitzbereich 2 angebracht ist. Ihr anderes Ende 21 weist zwei randseitige Aufnahmen 22 und 23 auf, die sich in entgegengesetzte Richtungen öffnen. In die Aufnahmen 22 und 23 sind Scherbolzen 24 bzw. 25 eingelegt, die fest mit dem Monument verbunden sind. Scherbolzen 24 und 25 können mit leichtem Spalt in den Aufnahmen 22 bzw. 23 eingelegt sein oder auf Anlage liegen.

Werden der Sitzbereich 2 und das Monument 3 in der durch den Doppelpfeil angedeuteten Hauptlasteinleitungsrichtung zusammengedrückt, drückt die Hilfsversteifung 18 mit ihrer Aufnahme 22 auf den Scherbolzen 24, während die Aufnahme 23 von dem Scherbolzen 25 weggedrückt wird. Liegt die auf den Scherbolzen 24 ausgeübte Last unterhalb der (maximalen) Versagenslast, bleibt der Scherbolzen 24 intakt und verhindert, dass sich der Sitzbereich 2 und das Monument 3 aufeinander zubewegen. Wird die Versagenslast des Scherbolzens 24 erreicht oder überschritten, wird der Scherbolzen 24 abgeschert. Der Sitzbereich 2 und das Monument 3 bewegen sich dann aufeinander zu und können dann mindestens ein nicht eingezeichnetes Crashelement unter Energieübertrag plastisch verformen.

Werden der Sitzbereich 2 und das Monument 3 in der durch den Doppelpfeil angedeuteten Hauptlasteinleitungsrichtung auseinandergezogen, drückt die Hilfsversteifung 18 mit ihrer Aufnahme 23 auf den Scherbolzen 25, während die Aufnahme 22 von dem Scherbolzen 24 weggedrückt wird. Liegt die auf den Scherbolzen 25 ausgeübte Last unterhalb der zugehörigen (maximalen) Versagenslast, bleibt der Scherbolzen 25 intakt und verhindert, dass sich der Sitzbereich 2 und das Monument 3 voneinander wegbewegen. Wird die Versagenslast des Scherbolzens 25 erreicht oder überschritten, wird der Scherbolzen 25 abgeschert. Der Sitzbereich 2 und das Monument 3 entfernen sich dann voneinander und können so mindestens ein nicht eingezeichnetes Crashelement unter Energieübertrag plastisch verformen.

Die Hilfsversteifung 18 mag auch umgekehrt in Bezug auf den Sitzbereich 2 und das Monument 3 angeordnet sein.

Dieses Ausführungsbeispiel weist den Vorteil auf, dass eine Versagenslast für den Fall eines Zusammendrückens und eines Auseinanderziehens des Sitzbereichs 2 und des Monuments 3 gezielt unabhängig voneinander einstellbar ist. So mögen die Versagenslasten der Scherbolzen 24 und 25 gleich oder unterschiedlich sein.

**Fig.7** zeigt in Seitenansicht noch eine weitere mögliche Hilfsversteifung 26. Die Hilfsversteifung 26 ist ebenfalls als ein steifes Metallstück ausgebildet, das mit einem Ende fest an dem Sitzbereich 2 angebracht ist. Die Hilfsversteifung 26 weist ein Auge 27 auf, in das ein Scherbolzen 28 eingesetzt ist. Der Scherbolzen 28 ist fest mit dem Monument 3 verbunden.

Werden der Sitzbereich 2 und das Monument 3 in der durch den Doppelpfeil angedeuteten Hauptlasteinleitungsrichtung zusammengedrückt oder auseinandergezogen, drückt die Hilfsversteifung 26 mit ihrer Aufnahme 27 auf den Scherbolzen 28. Wird dabei die Versagenslast des Scherbolzens 28 erreicht oder überschritten, wird der Scherbolzen 28 abgeschert. Der Sitzbereich 2 und das Monument 3 können sich dann relativ zueinander bewegen und dabei mindestens ein nicht eingezeichnetes Crashelement unter Energieübertrag plastisch verformen. Die Hilfsversteifung 26 mag auch umgekehrt in Bezug auf den Sitzbereich 2 und das Monument 3 angeordnet sein.

Dieses Ausführungsbeispiel weist den Vorteil auf, dass es besonders einfach umsetzbar ist.

Selbstverständlich ist die vorliegende Erfindung nicht auf das gezeigte Ausführungsbeispiel beschränkt.

So mag das Crashelement 4 in Fig.4 beispielsweise auch so geformt sein, dass die Seiten E1 und E2 der Einhüllenden E geradlinig oder gekrümmt aufeinander zulaufen bzw. sich konusförmig oder parabelförmig verjüngen, insbesondere spiegelsymmetrisch zueinander. Dies mag beispielsweise durch eine sich im Verlauf des Zwischenabschnitts sukzessive verkürzende Länge der geraden Abschnitte erreicht werden. Zusätzlich oder alternativ mögen sich Krümmungen bzw. Winkel α im Verlauf des Crashelements 4 ändern, z.B. sukzessive kleiner oder größer werden. Ferner mag die Zahl der geraden Abschnitte 9 und der gekrümmten Verbindungsabschnitte 10 größer oder kleiner sein als in dem in Fig.4 gezeigten Ausführungsbeispiel. So mag der Verlauf des Crashelements auch eine einfache S-Form, eine Dreifach-S-Form usw. aufweisen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Diwan
- 2: Sitzbereich
- 3: Monument
- 4: Crashelement
- 5: Erster Befestigungsbereich
- 6: Zweiter Befestigungsbereich
- 7: Zwischenabschnitt
- 8: Aussparung
- 9: Geradliniger Abschnitt
- 10: Gekrümmter Verbindungsabschnitt
- 11: Rastvorrichtung
- 12: Hilfsversteifung
- 13: Hilfsversteifung
- 14: Dorn
- 15: Membran
- 16: Auf der Membran aufliegendes Ende
- 17: Loch in der Membran
- 18: Hilfsversteifung
- 20: Ende der Hilfsversteifung
- 21: Anderes Ende der Hilfsversteifung
- 22: Randseitige Aufnahme
- 23: Randseitige Aufnahme
- 24: Scherbolzen
- 25: Scherbolzen
- 26: Hilfsversteifung
- 27: Auge
- 28: Scherbolzen
- α: Winkel
- E: Einhüllende
- E1: Seite der Einhüllenden
- E2: Seite der Einhüllenden
- F: Fahrzeug
- M: Hauptbewegungsrichtung des Fahrzeugs

## Patentansprüche

1. Fahrzeugmöbel (1), aufweisend ein erstes Möbelteil (2) und ein zweites Möbelteil (3), die mittels mindestens eines Crashelements (4) miteinander verbunden sind, wobei mindestens ein Crashelement (4) einen ersten Befestigungsbereich (5) zur Befestigung an dem ersten Möbelteil (2), einen zweiten Befestigungsbereich (6) zur Befestigung an dem zweiten Möbelteil (3) und dazwischen einen mäanderförmig verlaufenden Zwischenabschnitt (7) aufweist, **dadurch gekennzeichnet, dass** das erste Möbelteil (2) und das zweite Möbelteil (3) mittels mindestens einer Hilfsversteifung (12; 13; 18; 26) miteinander verbunden sind und die Hilfsversteifung (12; 13; 18; 26) eine vorbestimmte Versagenslast aushält.

2. Fahrzeugmöbel (1) nach Anspruch 1, wobei der Zwischenabschnitt (7) mindestens zwei geradlinige Abschnitte (9) mit einem jeweiligen diese verbindenden gekrümmten Verbindungsabschnitt (10) aufweist.

3. Fahrzeugmöbel (1) nach Anspruch 2, wobei mindestens ein Verbindungsabschnitt (10) eine Krümmung zwischen 20° und 105°, insbesondere zwischen 30° und 60°, insbesondere von ca. 45°, aufweist.

4. Fahrzeugmöbel (1) nach einem der Ansprüche 2 oder 3, wobei der Zwischenabschnitt (7) drei geradlinige Abschnitte (9) aufweist.

5. Fahrzeugmöbel (1) nach einem der Ansprüche 2 bis 4, wobei die Befestigungsbereiche (5, 6) einen geradlinigen Verlauf aufweisen.

6. Fahrzeugmöbel (1) nach einem der vorhergehenden Ansprüche, wobei der Zwischenabschnitt (7) mindestens eine Aussparung, insbesondere mindestens ein Loch, aufweist, insbesondere an einem Verbindungsabschnitt (7).

7. Fahrzeugmöbel (1) nach einem der vorhergehenden Ansprüche, wobei das Fahrzeugmöbel (1) mehrere Crashelemente (4) aufweist, die beabstandet nebeneinander angeordnet sind, insbesondere in Bezug auf eine gemeinsame Hauptdeformationsrichtung.

8. Fahrzeugmöbel (1) nach einem der vorhergehenden Ansprüche, wobei das Fahrzeugmöbel (1) mindestens zwei Crashelemente (4) aufweist, die in entgegengesetzte Richtungen zusammendrückbar sind.

9. Fahrzeugmöbel (1) nach einem der vorhergehenden Ansprüche, wobei zumindest ein Crashelement (4) an zumindest einem Befestigungsbereich (2) eine Rastvorrichtung (11) aufweist.

10. Fahrzeugmöbel (1) nach einem der vorhergehenden Ansprüche, wobei das Fahrzeugmöbel (1) ein Diwan ist.

11. Fahrzeug (F), aufweisend mindestens ein Fahrzeugmöbel (1) nach einem der vorhergehenden Ansprüche.

## Claims

1. Item of vehicle furniture (1), having a first furniture part (2) and a second furniture part (3), which are connected to each other by means of at least one crash element (4), wherein at least one crash element (4) has a first fastening region (5) for fastening to the first furniture part (2), a second fastening region (6) for fastening to the second furniture part (3) and, in between, an intermediate portion (7) running in a meandering manner, **characterized in that** the first furniture part (2) and the second furniture part (3) are connected to each other by means of at least one auxiliary stiffening means (12; 13; 18; 26), and the auxiliary stiffening means (12; 13; 18; 26) withstands a predetermined failure load.

2. Item of vehicle furniture (1) according to Claim 1, wherein the intermediate portion (7) has at least two rectilinear portions (9) with a respective curved connecting portion (10) connecting them.

3. Item of vehicle furniture (1) according to Claim 2, wherein at least one connecting portion (10) has a curvature of between 20° and 105°, in particular of between 30° and 60°, in particular of approx. 45°.

4. Item of vehicle furniture (1) according to either of Claims 2 and 3, wherein the intermediate portion (7) has three rectilinear portions (9).

5. Item of vehicle furniture (1) according to one of Claims 2 to 4, wherein the fastening regions (5, 6) have a rectilinear profile.

6. Item of vehicle furniture (1) according to one of the preceding claims, wherein the intermediate portion (7) has at least one cut-out, in particular at least one hole, in particular on a connecting portion (7).

7. Item of vehicle furniture (1) according to one of the preceding claims, wherein the item of vehicle furniture (1) has a plurality of crash elements (4) which are arranged spaced apart next to one another, in particular with respect to a common main direction of deformation.

8. Item of vehicle furniture (1) according to one of the preceding claims, wherein the item of vehicle furniture (1) has at least two crash elements (4) which are compressible in opposite directions.

9. Item of vehicle furniture (1) according to one of the preceding claims, wherein at least one crash element (4) has a latching device (11) on at least one fastening region (2).

10. Item of vehicle furniture (1) according to one of the preceding claims, wherein the item of vehicle furniture (1) is a divan.

11. Vehicle (F), having at least one item of vehicle furniture (1) according to one of the preceding claims.

## Revendications

1. Meuble de véhicule (1), présentant une première partie de meuble (2) et une deuxième partie de meuble (3) qui sont connectées l'une à l'autre au moyen d'au moins un élément de collision (4), au moins un élément de collision (4) présentant une première région de fixation (5) pour la fixation à la première partie de meuble (2), une deuxième région de fixation (6) pour la fixation à la deuxième partie de meuble (3) et entre elles, une portion intermédiaire (7) s'étendant en forme de méandres,
**caractérisé en ce que**
la première partie de meuble (2) et la deuxième partie de meuble (3) sont connectées l'une à l'autre au moyen d'au moins un renforcement auxiliaire (12 ; 13 ; 18 ; 26) et le renforcement auxiliaire (12 ; 13 ; 18 ; 26) supportant une charge de rupture prédéterminée.

2. Meuble de véhicule (1) selon la revendication 1, dans lequel la portion intermédiaire (7) présente au moins deux portions rectilignes (9) avec une portion de liaison courbe (10) reliant celles-ci.

3. Meuble de véhicule (1) selon la revendication 2, dans lequel au moins une portion de liaison (10) présente une courbure comprise entre 20° et 105°, en particulier entre 30° et 60°, en particulier d'environ 45°.

4. Meuble de véhicule (1) selon l'une quelconque des revendications 2 ou 3, dans lequel la portion intermédiaire (7) présente trois portions rectilignes (9) .

5. Meuble de véhicule (1) selon l'une quelconque des revendications 2 à 4, dans lequel les régions de fixation (5, 6) présentent une allure rectiligne.

6. Meuble de véhicule (1) selon l'une quelconque des revendications précédentes, dans lequel la portion intermédiaire (7) présente au moins un évidement, en particulier au moins un trou, en particulier au niveau d'une portion de liaison (7).

7. Meuble de véhicule (1) selon l'une quelconque des revendications précédentes, dans lequel le meuble de véhicule (1) présente plusieurs éléments de collision (4) qui sont disposés de manière espacée les uns à côté des autres, en particulier par rapport à une direction de déformation principale commune.

8. Meuble de véhicule (1) selon l'une quelconque des revendications précédentes, dans lequel le meuble de véhicule (1) présente au moins deux éléments de collision (4) qui peuvent être comprimés dans des directions opposées.

9. Meuble de véhicule (1) selon l'une quelconque des revendications précédentes, dans lequel au moins un élément de collision (4) présente un dispositif d'encliquetage (11) au niveau d'au moins une région de fixation (2).

10. Meuble de véhicule (1) selon l'une quelconque des revendications précédentes, dans lequel le meuble de véhicule (1) est une banquette.

11. Véhicule (F) présentant au moins un meuble de véhicule (1) selon l'une quelconque des revendications précédentes.
